# EUROPEAN PATENT SPECIFICATION

(11) **EP 2 172 001 B1**
(45) Date of publication and mention of the grant of the patent: **08.08.2012**
(21) Application number: 07796612.5
(22) Date of filing: 28.06.2007
(51) Int. Cl.: H04N 5/265, H04N 5/268, H04H 60/04

(54) **DUAL USE VIDEO MIXER CROSSPOINT MATRIX**
VIDEOMISCHER-CROSSPOINT-MATRIX MIT ZWEIFACHER VERWENDUNG
MATRICE DE POINT DE CROISEMENT DE MÉLANGEUR VIDÉO À DOUBLE UTILISATION

(43) Date of publication of application: 07.04.2010
(73) Proprietor: GVBB Holdings S.A.R.L, 2086 Luxembourg (LU)
(72) Inventor: CASPER, David, Alan, Nevada City, California 95959 (US); SHINN, Jay, B., Nevada City, California 95959 (US); NARVESON, Mark, Alan, Nevada City, California 95959 (US)
(74) Representative: Hill, Justin John
(86) International application number: PCT/US2007/015247
(87) International publication number: WO 2009/002326

(56) References cited:
- EP-A- 1 758 375
- WO-A-92/05663
- GB-A- 2 323 738
- US-A- 5 194 952
- US-A- 5 530 434
- US-A1- 2003 223 562
- PESA SWITCHING SYSTEMS, INC.: "3500PRO Routing Switcher Control System" [Online] February 2006 (2006-02), QUSTREAM , XP002473925 Retrieved from the Internet: URL:http://www.pesa.com/pdf/LIT_3500CONTRO L_2006.pdf> [retrieved on 2008-03-25] pages 1-12

## Description

### FIELD OF THE INVENTION

This invention relates to the field of television image production employing vision mixing equipment with image switching and manipulation and in particular to the assignment and use of such features.

### BACKGROUND OF THE INVENTION

A plant producing television programming can vary greatly in terms of size, facilities and complexity of equipment. However, a common requirement, regardless of plant size, is the need to provide interconnection capability between essentially all of the equipment comprising the facility. For example, in a very modest arrangement, a source of image signals must be routed via a switching arrangement for recording or live transmission. Such signal routing can be provided by an arrangement known as a routing switcher which comprises an array or matrix of switching crosspoints. Clearly as the number of television plant video facilities increases so too does the size of the routing switcher in terms of signal inputs and outputs. For example, a network TV station may require that 400 inputs can be routed to 200 outputs. Furthermore, the demand for such routing capabilities can change dynamically during any 24-hour period as TV programming is broadcast, commercial advertising inserted etc. In addition, for example, the broadcasting of sports programming can require the assemblage of content from multiple remote event locations which can demand signal routing capability in excess of the switching capacity of the plant routing matrix.

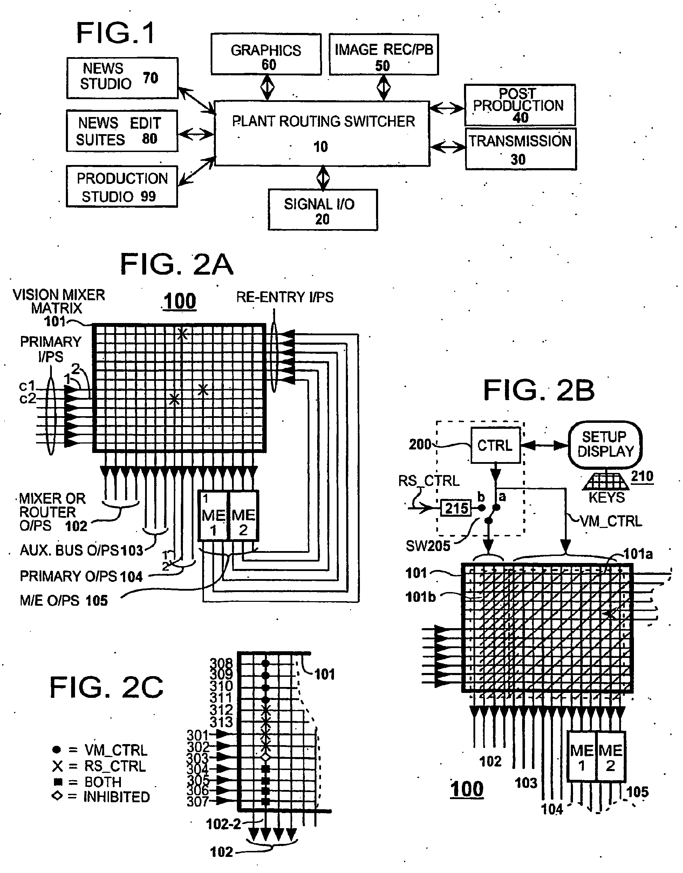

An exemplary television plant video facility is shown in Figure 1. Signal interconnections between the various constituent parts of the television plant are provided by the plant routing switcher 10. The routing switcher accepts signals from sources and provides selected signals to destinations. For example, in a TV broadcast operation, signals from an image source 50 such as a recorder/player or telecine are required to be connected via router 10 to a transmission facility 30. The transmission facility then supplies the signals, possibly with logo inserted and voice over, again via router 10 to the signal output part of block 20 for transmission beyond the plant by cable, fiber, RF or satellite.

Facility block 20 of Figure 1 provides a signal interface for coupling signals to and from the TV plant. The signals may be analog or digital video representative signals in compressed or uncompressed forms together with audio signals such as dialog, music and effects etc., also represented in analog or digital forms either compressed or uncompressed. In addition, the signal interface will convey communication information or talkback and possibly control information. These various signals are coupled via router 10 for use within and beyond the TV plant.

Image record and playback block 50 can include equipment such as image recorders, image players, film reproducers or telecines. These various image sources and destinations provide both the image and accompanying audio. Electronically generated images or image components are generated within Graphics block 60 and are made available for use throughout the TV plant by router 10.

The production of television programming can occur in news studio 70, in conjunction with news editing suites 80, and in production studio 99. Once again, all these facilities are dependent on plant routing switcher 10 to provide input signals and to accept output signals for subsequent transmission via block 30 or for post production editing etc. in block 40.

Document US 5 194 952 discloses a video processing system and more precisely an improved composite video digital switcher having an improved transition control and display.
Document entitled "2500PRO Routing switcher control system" from Pesa switching systems inc, published on February 2006 discloses a routing system.

Document US 5 530 434 discloses a matrix switcher for selectively outputting information signals in the form of various communication protocols.

### SUMMARY OF THE INVENTION

Briefly, in accordance with a preferred embodiment of the present principles, there is provided a vision mixer comprising: a video processor and a switching matrix having a first matrix portion for selecting a first set of signals for routing within said vision mixer to said video processor and a second matrix portion different than said first matrix portion for selecting a second set of signals for routing to output destinations other than said video processor and said vision mixer characterised in that said first matrix portion is controlled by a first protocol of said vision mixer; and wherein control of said second matrix portion can be delegated from said vision mixer to an external switcher, to be controlled by a second protocol of said external switcher, which is different from said first protocol. A method for controlling a vision mixer characterized in that the method comprises: using a plurality of signal routing paths within a vision mixer switching matrix for routing video signals; controlling ones of said signal routing paths by said vision mixer for routing signals to a video processor of said vision mixer, by a first protocol of said vision mixer; delegating control of different other ones of said signal routing paths from said vision mixer to an external switcher for routing signals to destinations external to said vision mixer by a second protocol of said external switcher; wherein said first and second protocols are different from each other.

As outlined previously plant routing capabilities vary dynamically and can periodically exceed signal routing capabilities provided by the routing matrix. In an inventive arrangement, unused or non-required signal switching capability resident within a vision mixer can be delegated to supplement a plant routing switcher. In a further inventive arrangement, control of the unused vision mixer switching crosspoints can be provided to a location beyond the production facility utilizing the vision mixer. In yet a further inventive arrangement, unused or non-required crosspoints can be selectably controlled by ones of a plurality of control protocols.

### BRIEF DESCRIPTION OF THE DRAWINGS

Figure 1 shows an exemplary of a television production plant.
Figures 2A 2B and 2C are simplified block diagrams of a vision mixer including inventive arrangements.
Figure 3 is a simplified block diagram of a plant routing switcher including inventive arrangements of Figures 2A, 2B, 2C.
Figure 4 is a simplified block diagram of a television facility including inventive arrangements of the prior figures.

### DETAILED DESCRIPTION

Production studio 99 of Figure 1 includes television cameras located on a studio floor part of studio 99 and an operational control room including a user interface control panel of a vision mixer. An exemplary vision mixer 100, also known as production switcher, is shown in Figure 2A. The vision mixer shown in Figure 2 includes a video switching matrix 101 of crosspoints plus two video processing units also known mix effects units ME1, ME2. Switching matrix 101 is depicted by a plurality of intersecting lines, where the horizontal lines represent input signal lines with the vertical lines representing signal paths to matrix output circuits. It will be appreciated that each vertical line or selected output signal path can be coupled to any horizontal or input signal line by user activation of a specific crosspoint diagrammatically located at the intersection of the vertical and horizontal lines. Only one matrix contact or crosspoint can be active at any time in an output line such as 104 - 1.

Matrix 101 may be considered as a video switch, however the term "video" may include various video representative signals. For example, a video signal may have analog or digital forms, and if in digital form may be linearly encoded or may be in a compressed form. Furthermore such a video switching matrix can also transport audio signals such as dialog, music and effects etc., also represented in digital form. Often the video switching matrix may be coupled or tied to other switching matrices that convey analog audio and or communication information, talkback, and control information such that these other matrices follow operator selections within matrix 101.

Production studio 99 of Figure 1 includes television cameras associated with or located on a studio floor part of studio 99. Signals (c1, c2 etc.) from these cameras are applied as primary input signals to an exemplary simplified vision mixer 100 of Figure 2A, which forms part of production studio 99. In Figure 2A, camera signal c1 is supplied to exemplary input 301 of vision mixer switching matrix 101. A specific crosspoint, signified by **X**, on the line associated with input 301 is energized responsive to user selection. This selection results in camera signal c1 being coupled to a matrix output which in turn supplies input 1 of video processing unit ME1. Video processing units are usually mix/effects processors (M/Es), but can also be digital video effects (DVEs) or digital picture manipulators (DPMs), video stores, or still stores. In some vision mixers or production switchers the primary output is derived directly from the processing units. However, frequently greater operational usefulness can be provided if the outputs from the processing units are returned as inputs or re-entries to the switching matrix with the primary outputs being taken at exemplary matrix outputs 104. In Figure 2A an output from video processing unit ME1 is re-entered to the matrix, with a specific crosspoint, signified by **X**, on the re-entered line being energized by the user. This crosspoint selection produces a primary output signal at matrix output 104 - 2.

Returning to the primary input of the vision mixer matrix, a second television camera signal c2 is supplied to input 302 of switching matrix 101. A specific crosspoint, signified by **X**, on the line associated with input 302 is energized by a user. This user selection, termed a cut, results in signal c2 appearing as a primary output signal at matrix output 104 - 1.

A number of exemplary matrix outputs are depicted in Figure 2A, namely 102, 103, 104 and 105. As described previously, the primary output from the vision mixer 100 is produced at matrix outputs 104. Matrix outputs 105 provide ME1 and ME2 output signals for re-entry to matrix 101 and outputs 102 and 103 are generally referred to as auxiliary or Aux Bus Outputs. Such auxiliary outputs are used within the studio production domain or environment, for example, to provide clean feeds, to allow sound operators to avoid boom microphone shadows, to provide engineering monitoring, and for on stage or audience viewing.

The size of the switching matrix within the vision mixer is initially determined by the number of inputs required plus the number of mix/effects processors and associated picture processing and re-entry requirements. Although this projected initial matrix size requirement can be fabricated, manufacturing economies often dictate that a standardized matrix size is used, somewhat independent of the number of mix/effects processors to be included within the mixer. Typically a vision mixer will include a large switching matrix; having for example, a matrix of 144 in by 144 out (144x144). However, despite many uses and users of the auxiliary outputs the number of matrix outputs available usually exceeds the production requirements of the vision mixer for primary and auxiliary bus outputs.

Clearly production requirements for switching matrix capacity vary depending on the nature of the production, for example, a sports presentation will typically require greater input source selection capability than that required by a talking heads interview show. However, excess switching matrix capacity can exist in a vision mixer and, in accordance with an inventive arrangement, this excess capacity can be delegated for use beyond the actual production studio purview to augment the plant, or mobile production truck signal routing systems.

In a first inventive arrangement, unused or excess switching capacity of matrix 101 is selected, as will be described, and is available at output 102 of Figure 2A. This routed output feature can be a dedicated, hard wired and a substantially permanent arrangement or may be user selectable and configurable. In addition this routed output provides the same utility as the auxiliary outputs, in that the routed output signal can be any of the primary input or re-entered M/E output signals. What distinguishes this advantageous routed output from an auxiliary bus output is the point of control. For auxiliary bus outputs, the point of control is the switcher control panel, dedicated auxiliary bus control panels, or software applications, all being within the studio purview or production environment and under control by the vision mixer control system. For the routed outputs, control is delegated, for example, to the plant routing switcher control system, associated control panels and graphic user interfaces or GUIs none of which are associated with the studio production purview and may be distant from the studio location.

These advantageous routed vision mixer outputs are delegated to be completely under control of the plant routing system and thereby become an extension of a plant video signal routing system. In a system with a plant router comprising a matrix of 256x256 or 512x512, an exemplary vision mixer has a matrix of 144x144 crosspoints, with 32 outputs that are assigned to be routed. Thus, to the plant routing control system it appears to have an additional matrix of 144x32 under its control. Hence the plant routing switcher must be reconfigured with the names of the 144 inputs sources and the 32 delegated outputs with respective destination names. This inventive arrangement can provide a significant increase of 144x32 in a plant's routing capacity at negligible cost, by utilizing unused or non-required capacity of vision mixer 100.

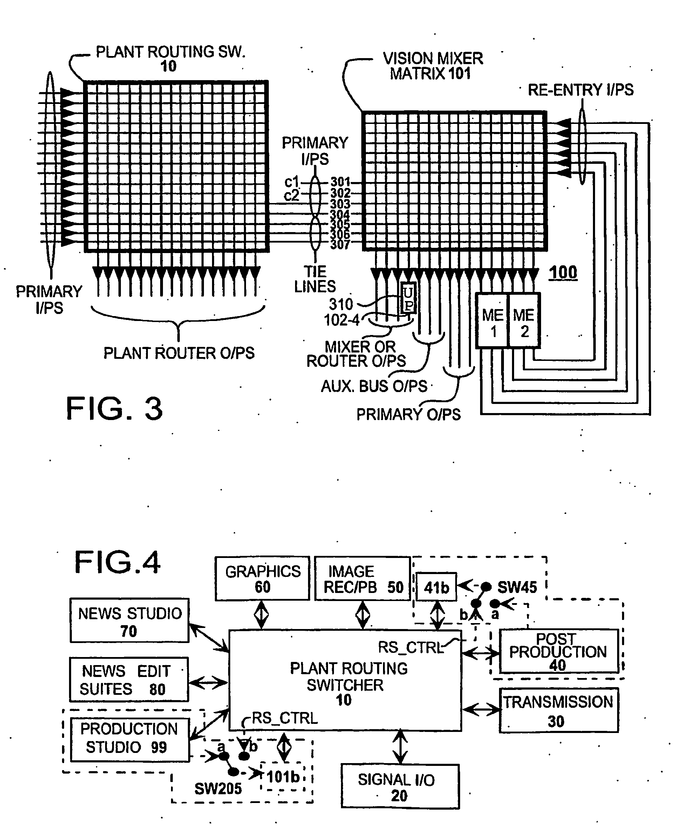

It should be remembered that the excess switching capacity of matrix 101 relates not only to spare or unused matrix outputs 102 but also to unused matrix input capacity. Each routed or delegated output can provide any signal which is a primary or re-entered input to the switching matrix 101 of mixer 100. Thus certain of matrix 101 inputs (301-307) may be coupled to input sources supplying the plant routing switcher 10 thereby allowing routed outputs 102 to access many signals available to the plant router but not usually associated with, or required by a studio production. This coupling of the plant routing switcher input signals to the vision mixer matrix can be provided by the use of manual or temporary connections often known as tie lines, shown coupled as inputs 305, 306, 307 in Figure 3.

This advantageous delegation of the vision mixer switching matrix requires that the matrix control system, or a portion of it, must capable of responding to control by the plant routing switcher control system. Typically manufacturer's of routing or production switcher systems refer to controlling their product as control of a native matrix whereas switcher systems designed and manufactured by another vendor are often known as alien matrices. It can be appreciated that native matrices will have a proprietary command language or protocol, whereas alien matrices usually facilitate control by an open control protocol.

Figure 2B is a block diagram of showing part of vision mixer 100 of Figure 2A with shaded areas 101 a and 101b overlaying matrix 101. These shaded areas represent portions of matrix 101 together with their respective crosspoint switching control protocol. Matrix portion 101 a is controlled by a control protocol (VM_CTRL) of vision mixer 100 which is generated within the vision mixer control logic depicted as block 200. In exemplary vision mixer 100 set up and engineering control is facilitated via a graphical user interface or GUI display screen with control panel and or key board, as depicted by elements 210. This GUI display control panel facilitates user delegation of matrix 101 for control by a separate and probably alien plant routing switcher protocol. Matrix portion 101 b is depicted controlled by a control protocol (RS_CTRL) of an exemplary alien routing switcher. Figure 2B depicts, in simplified form, a switch (SW205) for delegating control of portions of the vision mixer crosspoints and related outputs. However, switch SW205 can be implemented using many different electronic structures and or software all forming part of vision mixer control logic block 200.

In addition to delegating router control of certain of matrix outputs, control panel 210 also permits specific crosspoints within the router controlled matrix portion to be prevented from control delegation thereby preventing the routing switcher from accessing certain signals which may be present on matrix 101. For example, the studio output signal may be prevented from being accessed and coupled to destinations beyond the studio purview. In summary, control panel 210 can delegate control of crosspoints supplying specific matrix outputs and, in addition, can permit the mapping of specific crosspoints feeding an output to prevent delegation of control and thereby maintain control by the vision mixer. In a further advantageous arrangement, the selective crosspoint control mapping allows a matrix output to receive signals responsive to control by both the vision mixer and the routing switcher. Thus In addition to providing separate or partitioned crosspoint control by differing control protocols, this selective crosspoint control mapping can facilitate dual control where each control source, for example the mixer and routing switcher are capable of selecting signals for a specific matrix output.

The block diagram of Figure 2C shows exemplary matrix output 102 in greater detail and includes further inventive aspects of matrix 101. As described previously for Figure 2B, shaded areas 101a and 101b overlaying matrix 101 depict crosspoint control which is delegated between vision mixer 100 and routing switcher 10 such that sources coupled to a matrix output are controlled exclusively by mixer 100 or switcher 10. Figure 2C shows that crosspoints feeding a matrix output, for example 102-2, can be individually delegated for control. In Figure 2C exclusively mixer 100 control is depicted by the solid black circle, exclusive control by switcher 10 is depicted by an **X**, and inventive control by both mixer 100 and switcher 10 is depicted by a solid black square. A crosspoint on exemplary input 303 which can be inhibited to prevent activation by any control system and is depicted by an open diamond.

Returning to Figure 2B, in a first switch position (SW205a) matrix portion 101 b is responsive to the vision mixer protocol (VM_CTRL) and consequently the whole of the vision mixer matrix is controlled by vision mixer 100. In the second switch position (205b) matrix portion 101 b is controlled by a control protocol (RS_CTRL) from routing switcher (10). The routing switcher control signal is shown coupled via block 205 which provides any required switching protocol code conversion. For example, a Thomson Grass Valley routing switcher protocol SMS 7000 requires conversion within block 215 to facilitate control of the exemplary vision mixer matrix portion and this it may be implemented as a physically separate electronic device, employing software and or lookup tables, or may be resident within control system 200 of vision mixer 100.

In Figure 2B matrix area 101 b is depicted as four matrix columns feeding four exemplary outputs 102. However, as has been discussed, the size of the matrix portion which is delegated may be a fixed or may be user determined and therefore adjustable, hence the number of crosspoint columns and respective outputs can be more or less than shown in Figure 2B. Furthermore, it will be appreciated that following switching protocol code conversion controller 200 can facilitate crosspoint control mapping of not only complete matrix outputs but also individual crosspoints coupled to an output as depicted in Figure 2C. In addition controller 200 provides arbitration to permit dual control of an individual crosspoints. However, certain operational constraints may be applied to prevent output source selections from being interrupted by the second user. Such protection can be provided by a warning screen provided to the second control location advising of the potential for undesired output source change. Such protection can also require that once a crosspoint is selected from any control location the selection is then prevented from de-selection except when authorized by the selecting location. In summary, the advantageous dual control permits any control location to select a source crosspoint but once selected only the selecting location is permitted to change the selection.

Figure 3 is an exemplary block diagram which shows vision mixer 100, with inventive crosspoint delegation, coupled to plant routing switcher 10. For drawing simplicity in Figure 3, routing switcher 10 is depicted as a 16x16 matrix, however as previously described, such routing switchers can often have matrices of 256x256 or 512x512 crosspoints. Also for drawing simplicity vision mixer matrix 101 shows only 7 input lines (301-307). These inputs comprise signals from two exemplary studio cameras on inputs 301, 302. These camera signals can be supplied to the studio matrix via routing switcher 10 but are more often connected as shown, directly to the mixer matrix. Two further exemplary inputs (303-304) couple signals such as image recording and or replay equipment via the plant routing switcher 10 to the mixer switching matrix 101. The remaining three exemplary inputs 305, 306, 307 are termed tie line inputs and these provide input signals to mixer switching matrix which are not normally required during a studio production. These tie line input signals allow the delegated crosspoints to provide substantially the same utility as the actual routing switcher crosspoints.

The inventive delegation of mixer matrix control not only facilitates the selection and outputting of input signals not normally associated with a production studio but in addition can provide an ability to utilize vision mixer processing equipment. For example, image conversion equipment can provide up or down conversion to facilitate a requirement for a high definition HD signal from an SD image signal input or the converse thereof. Additionally, such mixer processing equipment can for example provide image aspect ratio conversion or color correction. An example of advantageous mixer processing equipment is depicted as high definition HD signal conversion block UP, 310 of Figure 3, which provides an appropriately processed output signal at output 102-4.

Figure 4 shows a simplified block diagram of a television facility including various inventive arrangements discussed previously. Plant routing switcher 10 is depicted with matrix portions 41b and 101b delegatable from respective vision mixers. An exemplary post production facility 40 includes a vision mixer 41 which permits delegation of control of matrix 41 b as described previously for mixer 100 of studio 99. In Figure 4, although both mixers 41 and 100 and respective delegated matrix portions 41b and 101b are depicted as separate elements, the structural commonality of these elements is indicated by the broken line box in which the respective elements are enclosed.

Figure 4 shows the delegated matrix portion of mixer 41 controlled by switching protocol switch SW45 which is depicted in position **b** indicating that the delegated portion of matrix portion 41 b is under control by routing switcher 10. Similarly the delegated portion of mixer 101b, shown with a broken line, is controlled by switching protocol switch SW205 which is depicted in position **a**, indicating that matrix portion 101 b maintains control by vision mixer 100. It will be apparent that this advantageous vision mixer crosspoint delegation can be applied to any vision mixer matrix with unused switching capacity to augment routing switcher capacity without significant cost.

## Claims

1. A vision mixer comprising:
a video processor; and,
a switching matrix (101) having a first matrix portion for selecting a first set of signals for routing within said vision mixer (100) to said video processor and a second matrix portion different than said first matrix portion for selecting a second set of signals for routing to output destinations other than said video processor and said vision mixer **characterized in that** said first matrix portion is controlled by a first protocol of said vision mixer; and
wherein control of said second matrix portion can be delegated from said vision mixer to an external switcher, to be controlled by a second protocol of said external switcher, which is different from said first protocol.

2. The vision mixer of claim 1, wherein the second matrix portion comprises at least one crosspoint.

3. The vision mixer of claim 1, wherein the size of the second matrix portion is predetermined.

4. The vision mixer of claim 1, wherein the size of the second matrix portion is user selectable.

5. A method for controlling a vision mixer **characterized in that** the method comprises:
using a plurality of signal routing paths within a vision mixer switching matrix for routing video signals;
controlling ones of said signal routing paths by said vision mixer for routing signals to a video processor of said vision mixer, by a first protocol of said vision mixer;
delegating control of different other ones of said signal routing paths from said vision mixer to an external switcher for routing signals to destinations external to said vision mixer by a second protocol of said external switcher;
wherein said first and second protocols are different from each other.

## Patentansprüche

1. Ein Videomischer bestehend aus:
einem Videoprozessor; und
einer Schaltmatrix (101) mit einem ersten Matrixteil zur Auswahl eines ersten Signalsets zum Routen im besagten Videomischer (100) zum besagten Videoprozessor und einem zweiten, sich vom besagten ersten Matrixteil unterscheidenden Matrixteil zur Auswahl eines zweiten Signalsets zum Routen zu anderen Ausgabezielen als dem besagten Videoprozessor und dem besagten Videomischer, **dadurch gekennzeichnet, dass** der besagte erste Matrixteil von einem ersten Protokoll des besagten Videomischers gesteuert wird; und
wobei die Steuerung des besagten zweiten Matrixteils vom besagten Videomischer auf einen externen Schalter übertragen und von einem zweiten, sich vom besagten ersten Protokoll unterscheidenden Protokoll des besagten externen Schalters gesteuert werden kann.

2. Der Videomischer nach Anspruch 1, wobei der zweite Matrixteil mindestens einen Crosspoint umfasst.

3. Der Videomischer nach Anspruch 1, wobei die Größe des zweiten Matrixteils vorbestimmt ist.

4. Der Videomischer nach Anspruch 1, wobei die Größe des zweiten Matrixteils vom Benutzer auswählbar ist.

5. Eine Methode zur Steuerung eines Videomischers bestehend aus:
der Verwendung einer Vielzahl von Signal-Routing-Pfaden in einer Schaltmatrix eines Videomischers zum Routen von Videosignalen;
der Steuerung einiger der besagten Signal-Routing-Pfade durch den besagten Videomischer zum Routen von Signalen zu einem Videoprozessor des besagten Videomischers durch ein erstes Protokoll des besagten Videomischers;
der Übertragung der Steuerung verschiedener der besagten Signal-Routing-Pfade vom besagten Videomischer zu einem externen Schalter zum Routen von Signalen zu Ausgabezielen extern vom besagten Videomischer durch ein zweites Protokoll des besagten externen Schalters;
wobei sich die besagten ersten und zweiten Protokolle voneinander unterscheiden.

## Revendications

1. Un mélangeur vidéo, comprenant
un processeur vidéo ; et
une matrice de commutation (101) composée d'une première partie de la matrice, pour sélectionner un premier ensemble de signaux pour l'acheminement dudit mélangeur vidéo (100) audit processeur vidéo, et une deuxième partie de la matrice, différente de ladite première partie de la matrice, pour sélectionner un deuxième ensemble de signaux pour l'acheminement à des destinations de sortie autres que ledit processeur vidéo et ledit mélangeur vidéo, **caractérisée par le fait que** ladite première partie de la matrice est contrôlée par un premier protocole dudit mélangeur vidéo ; et
dans laquelle le contrôle de ladite deuxième partie de la matrice peut être délégué dudit mélangeur vidéo à un commutateur externe, commandé par un deuxième protocole dudit commutateur externe, et différent dudit premier protocole.

2. Le mélangeur vidéo selon la revendication 1, dans lequel la deuxième partie de la matrice comprend au minimum un point de croisement.

3. Le mélangeur vidéo selon la revendication 1, dans lequel la taille de la deuxième partie de la matrice est prédéterminée.

4. Le mélangeur vidéo selon la revendication 1, dans lequel la taille de la deuxième partie de la matrice doit être sélectionnée par l'utilisateur.

5. Une méthode de commande d'un mélangeur vidéo, **caractérisée par le fait qu'**elle comprend :
l'emploi d'une série de chemins d'acheminement du signal au sein de la matrice de commutation du mélangeur vidéo pour acheminer des signaux vidéo ;
le contrôle d'un desdits chemins d'acheminement du signal par ledit mélangeur vidéo pour acheminer des signaux à un processeur vidéo dudit mélangeur vidéo, par un premier protocole dudit mélangeur vidéo ;
la délégation du contrôle de différents autres chemins d'acheminement du signal dudit mélangeur vidéo à un commutateur externe pour l'acheminement de signaux à des destinations extérieures audit mélangeur vidéo par un deuxième protocole dudit commutateur externe ;
dans laquelle les premier et deuxième protocoles sont différents l'un de l'autre.
